# EUROPÄISCHE PATENTSCHRIFT

(11) **EP 1 523 413 B1**
(45) Veröffentlichungstag und Bekanntmachung des Hinweises auf die Patenterteilung: **30.03.2011**
(21) Anmeldenummer: 03764835.9
(22) Anmeldetag: 10.07.2003
(51) Int. Cl.: B41K 1/02, B41C 1/00

(54) **VERFAHREN UND EINRICHTUNG ZUR HERSTELLUNG EINES STEMPELS**
METHOD AND DEVICE FOR PRODUCING A STAMP
PROCEDE ET DISPOSITIF POUR LA PRODUCTION D'UN TIMBRE

(30) Priorität: 22.07.2002 AT 11102002
(43) Veröffentlichungstag der Anmeldung: 20.04.2005
(73) Patentinhaber: Colop Stempelerzeugung Skopek GmbH. & Co. KG, 4600 Wels (AT); Filzmoser, Franz, 4600 Thalheim bei Wels (AT)
(72) Erfinder: FILZMOSER, Franz, A-4600 Thalheim bei Wels (AT); FABER, Ernst, A-4600 Wels (AT)
(74) Vertreter: Sonn & Partner Patentanwälte
(86) Internationale Anmeldenummer: PCT/AT2003/000196
(87) Internationale Veröffentlichungsnummer: WO 2004/009364

(56) Entgegenhaltungen:
- EP-A- 0 426 363
- DE-A- 19 931 112
- US-A- 5 731 033
- US-B1- 6 520 084

## Beschreibung

Die Erfindung betrifft ein Verfahren zur Herstellung eines Stempels oder einer Druckplatte mit einer das Druckmotiv enthaltenden Oberfläche, welche durch schichtweises Aufbringen eines flüssigen und aushärtbaren Materials auf eine Unterlage hergestellt wird.

Die vorliegende Erfindung bezieht sich auf Stempel und Druckplatten oder ähnliche Einrichtungen, welche zum Übertragen eines Druckmotivs auf einen Körper dienen.

Üblicherweise werden Stempel oder Druckplatten aus verschiedenen Materialien durch Materialabtragung beispielsweise Gravieren, Fräsen od. dgl. hergestellt. Bei moderneren Geräten erfolgt die Materialabtragung auch mittels Laser, welche über einen Kunststoffblock geführt werden. Die zur Erzielung des gewünschten Klischees notwendigen Steuerungsdaten für das Bearbeitungswerkzeug bzw. den Laser werden meist von einem Computer geliefert.

Die materialabtragenden Verfahren zur Herstellung von Stempeln oder Druckplatten erfordern in der Regel einen relativ hohen Aufwand zur Entfernung des abgetragenen Materials. Darüber hinaus können am Stempel verbleibende Materialteilchen zu ungenauen und unerwünschten Druckergebnissen führen. Darüber hinaus ist die Schmutzbelastung durch materialabtragende Herstellungsverfahren relativ hoch, wodurch diese Geräte in einem separaten Raum aufgestellt oder zumindest mit einer Verschalung umgeben werden müssen.

Die US 5 731 033 A beschreibt ein Mittel und Verfahren zur Herstellung eines Stempels, bei dem ein flüssiges aushärtbares Material auf die das Druckmotiv enthaltene Oberfläche mit der Hand aufgebracht wird. Diese manuelle Herstellung eines Stempels zielt ausschließlich auf den Hausgebrauch ab und ist insbesondere für Kinder gut geeignet. Eine rasche und einfache Herstellung von Stempeln sowie die Herstellung sehr feiner Druckklischees mit hoher Auflösung ist jedoch nicht möglich.

Weiters sind Verfahren zur Herstellung von Stempel bekannt, bei denen der Stempelkörper durch Sintern eines pulverförmigen Materials hergestellt wird. Beispielsweise beschreibt die DE 39 21 623 A1 ein derartiges Verfahren. Dieses Sinterverfahren hat genauso wie Gussverfahren den Nachteil der relativ aufwendigen und kostenintensiven Herstellung der notwendigen Form, welche das jeweilige Druckmotiv enthält. Somit sind solche Herstellungsverfahren für kleine Auflagen von Stempeln od. dgl. ungeeignet.

Schließlich sind Verfahren zur Herstellung von Stempel bekannt, bei denen ein flüssiges Material durch gezielte Lichtbestrahlung verfestigt wird und das überschüssige Material beispielsweise unter Anwendung von Ultraschall entfernt wird. Ein derartiges Verfahren wird beispielsweise in der DE 197 47 877 A1 beschrieben. Die Handhabung von flüssigen Stempelflächenrohlingen ist jedoch aufwendig, da diese nicht ungewollt Lichtstrahlung ausgesetzt werden dürfen.

Laserverfahren oder Fotopolymerverfahren weisen hinsichtlich der entstehenden Rückstände zwar Vorteile auf, sind jedoch relativ aufwendig und teuer. Ein weiterer Nachteil bei den bekannten Herstellungsverfahren besteht in der Entstehung unerwünschter Abgase durch die Verbrennung des den Stempel od. dgl. darstellenden Kunststoffes, weshalb häufig eine Absaugung der entstehenden Abgase notwendig ist.

Auch stellt die Herstellungsgeschwindigkeit bekannter Systeme häufig ein Hindernis für eine rasche Herstellung von Druckklischees in besonders geringen Auflagen dar.

Die DE 199 31 112 A betrifft ein Verfahren und eine Vorrichtung zum Herstellen eines dreidimensionalen Mikrobauelements unter Verwendung eines nach dem Tintendruckprinzip arbeitenden Druckkopfes. Das Verfahren und die Einrichtung dient zur möglichst kostengünstigen Herstellung von Prototypen, die auch kleine Abmessungen aufweisen können. Dadurch kann die Herstellung der üblicherweise notwendigen und teuren Spritzgießformen entfallen. Als Materialien für das Mikrobauelement kommen Kunststoffe, Metalle und/oder Glas zur Anwendung. Dabei kann für bestimmte Strukturen des herzustellenden dreidimensionalen Mikrobauelements auch ein Stützmaterial mitaufgetragen werden, welches später entfernt wird, so dass das gewünschte Mikrobauelement resultiert. Die DE 199 31 112 A gibt keinen Hinweis auf die besonders kostengünstige rasche und einfache Herstellung von Druckmotiven auch in geringer Stückzahl.

Die EP 426 363 A zeigt ebenfalls ein Verfahren und eine Einrichtung zur Herstellung von dreidimensionalen Prototypen mit komplizierter Struktur. Auch dieses "Rapid-Prototyping-Verfahren" unterscheidet sich vom Gebiet der vorliegenden Patentanmeldung.

Die Aufgabe der vorliegenden Erfindung besteht daher in der Schaffung eines oben genannten Verfahrens zur Herstellung eines Stempels oder einer Druckplatte, welches eine besonders kostengünstige, rasche und einfache Herstellung von Druckmotiven auch in geringer Stückzahl ermöglicht.

Gelöst wird die erfindungsgemäße Aufgabe dadurch, dass das schichtweise Aufbringen des flüssigen und aushärtbaren Materials im Druckverfahren durchgeführt wird. Durch die Herstellung des Stempels oder der Druckplatte im Druckverfahren ähnlich dem Inkjet-Verfahren ist keine Materialabtragung erforderlich, wodurch keine Einrichtungen zur Entfernung von Materialrückständen und zur Absaugung entstehender Dämpfe od. dgl. notwendig sind. Weiters sind keine Einrichtungen zum Schutz der Umgebung vor Verunreinigungen notwendig. Im Druckverfahren sind je nach Auswahl des flüssigen und aushärtbaren Materials und des entsprechenden Druckkopfes relativ hohe Auflösungen erzielbar, so dass auch sehr feine Druckklischees einfach und rasch hergestellt werden können. Um die für den Stempel oder die Druckplatte bildende reliefartige Struktur zu erhalten, werden mehrere Schichten des flüssigen und aushärtbaren Materials übereinander angeordnet. Zu diesem Zweck wird zumindest ein Druckkopf mit zumindest einer Düse über eine Unterlage bewegt und das flüssige und aushärtbare Material tropfenweise abgegeben. Die Abgabe wird über ein entsprechendes Ventil entsprechend den Daten eines Rechners gesteuert. Ein weiterer Vorteil besteht darin, dass mit diesem Verfahren auch besonders große Stempel oder Druckplatten relativ kostengünstig herstellbar sind. Die Unterlage, auf der die das Druckmotiv enthaltende Oberfläche aufgebracht wird, kann dabei nach dem Druckvorgang entfernt werden oder auch verbleiben.

Vor dem Aufbringen des die Oberfläche bildenden Materials kann gegebenenfalls eine Haftvermittlerschicht auf die Unterlage aufgetragen werden. Diese dient zur Herstellung einer Verbindung des im Druckverfahren hergestellten Klischees mit der Unterlage. Das Material für den Haftvermittler muss auf das Material der Unterlage sowie das verwendete Material zur Herstellung des Druckmotivs abgestimmt sein.

Dem die Oberfläche bildenden Material können vor dem Druckvorgang Zusatzstoffe beigemischt werden. Diese können beispielsweise zur Beschleunigung des Aushärtprozesses oder zur Bildung von Poren für selbstfärbende Stempel, sogenannte Self-Ink-Stempel dienen. Auf diese Weise können zwei oder mehrere Komponenten des flüssigen und aushärtbaren Materials kurz vor dem Druckvorgang miteinander vermischt werden.

Zur Erhöhung der Viskosität des die Oberfläche bildenden Materials kann dieses vor und bzw. oder während dem Druckvorgang aufgewärmt werden.

Um eine besonders rasche Herstellung des Stempels oder der Druckplatte zu ermöglichen, kann das Aushärten des die Oberfläche bildenden Materials zwischen dem schichtweisen Aufbringen beschleunigt werden. Dies kann beispielsweise durch Kühlen oder durch Besprühen mit Härtern oder anderen chemischen Stoffen erfolgen.

Gemäß einem weiteren Merkmal der Erfindung ist vorgesehen, dass die Menge des aufgebrachten Materials dosierbar ist. Somit können durch die Dosierung des Materials besonders feine Details im Klischee des Stempels oder der Druckplatte hergestellt werden.

Im Falle einer dosierbaren Menge des aufgebrachten Materials kann dieses auch von Schicht zu Schicht verringert werden, um im Querschnitt verjüngende Stege zu erzielen und somit feinere Stempelbilder zu ermöglichen, ohne dass die Gefahr des Bruchs von Stegen im Klischee gegeben ist.

Vorzugsweise wird als die Oberfläche bildendes Material ein Polymer oder flüssiger Kautschuk verwendet.

Zur Erzielung selbstfärbender sogenannter Self-Ink-Stempel kann als die Oberfläche bildendes Material ein poröses Material verwendet werden. Durch die entstehenden Poren diffundiert die Tinte bei Druckanwendung an die Oberfläche des Stempels oder der Druckplatte.

Als Unterlage kann eine Glasplatte verwendet werden, welche nach Abschluss des Herstellungprozesses mit dem Druckmotiv in Verbindung bleibt, oder von der das Druckmotiv vor der Anordnung am Stempel oder an der Druckplatte entfernt wird.

Ebenso ist es möglich, dass als Unterlage eine Trägerfolie aus Kunststoff verwendet wird, welche vorzugsweise nach Abschluss des Herstellungsprozesses auf dem Stempel oder der Druckplatte verbleibt.
Durch die erfindungsgemäße Verwendung einer Druckeinrichtung, insbesondere einer dem Inkjet-Verfahren ähnlichen Einrichtung zur Herstellung von Stempel oder Druckplatten, kann eine besonders kostengünstige und rasche Herstellung von Stempeln oder Druckplatten auch in geringen Stückzahlen erzielt werden. Die Bewegung des Druckkopfes in Bezug auf die Oberfläche des Stempels oder der Druckplatte kann dabei sowohl durch Bewegung des Druckkopfes als auch durch Bewegung der Unterlage, auf der das Druckmotiv aufgebaut werden soll, oder Bewegung beider Elemente, erzielt werden. Üblicherweise kann der Druckkopf in Bezug auf die Unterlage in horizontaler und vertikaler Richtung bewegt werden.

Wenn der Druckkopf eine Heizeinrichtung beinhaltet, kann das die Oberfläche bildende Material vor dem Ausstoß erwärmt werden und dessen Viskosität erhöht werden, so dass feinere Tröpfchen des Materials abgegeben werden können.

Wenn eine Mischeinrichtung zum Mischen des die Oberfläche bildenden Materials vorgesehen ist, kann einerseits ein Zwei- oder Mehrkomponentenmaterial, welches beispielsweise nach dem Mischen besonders rasch aushärtet, eingesetzt werden oder es können auch andere Zusatzstoffe dem Material beigemengt werden.

Zur Beschleunigung des Aushärtevorgangs kann eine Kühleinrichtung vorgesehen sein, welche dem Druckkopf vorzugsweise nachführbar ist.

Diese Kühleinrichtung kann beispielsweise durch ein Gebläse od. dgl. gebildet sein, welches den Aushärtvorgang des Materials beschleunigt.

Zur Ansteuerung der Druckeinrichtung zur Herstellung von Stempeln oder Druckplatten weist diese vorzugsweise eine Schnittstelle zur Verbindung mit einer Recheneinheit auf.

Die vorliegende Erfindung wird anhand der beigefügten Zeichnungen näher erläutert.

Darin zeigt:
Fig. 1 eine perspektivische schematische Ansicht einer Einrichtung zur Herstellung eines Stempels;
Fig. 2 eine perspektivische Ansicht zur Veranschaulichung eines möglichen Bewegungsablaufs des Druckkopfs;
Fig. 3 das Schnittbild eines Teils einer erfindungsgemäß hergestellten Stempeloberfläche;
Fig. 4 eine Variante eines Schnittbildes eines Teils einer Stempeloberfläche;
Fig. 5 eine perspektivische Ansicht eines Teils einer im Druckverfahren hergestellten Stempeloberfläche; und
Fig. 6 bis 8 Schnittbilder verschiedener Ausführungsformen eines im Druckverfahren hergestellten Stempels.

Die Einrichtung zur Herstellung eines Stempels 1 oder einer Druckplatte mit einer das Druckmotiv 2 enthaltenden Oberfläche 3 umfasst eine Druckeinrichtung 4 mit zumindest einem Druckkopf 5 mit zumindest einer Düse 6. Der Druckkopf 5 ist über die Oberfläche 3 vorzugsweise in X,- Y,- und Z-Richtung bewegbar angeordnet. Ebenso ist es möglich, dass der Druckkopf 5 stillsteht und der Stempel 1 bzw. die Unterlage entsprechend bewegt wird. In einem Behälter 7 ist das die Oberfläche 3 des Stempels 1 oder der Druckplatte bildende Material 8 oder zumindest eine Komponente des Materials 8 enthalten. Über eine entsprechende Zuleitung 9 kann das flüssige Material 8 zum Druckkopf 5 bewegt werden. Gegebenenfalls wird in einem weiteren Behälter 10 eine Komponente 11 bzw. ein Zusatzstoff gelagert, der über eine Zuleitung 12 dem Druckkopf 5 zugeführt wird. In einer allfälligen Mischeinrichtung 13 wird das Material 8 mit dem Zusatzstoff 11 vor dem Ausstoß aus dem Druckkopf 5 gemischt. Zur Erhöhung der Viskosität des Materials 8 kann dieses in einer Heizeinrichtung 14 im oder vor dem Druckkopf 5 aufgewärmt werden. Die zur Steuerung der Materialabgabe im Druckkopf 5 notwendigen Daten werden üblicherweise von einer Rechnereinheit 15 geliefert, welche über eine Schnittstelle 16 mit der Druckeinrichtung 4 verbunden ist.

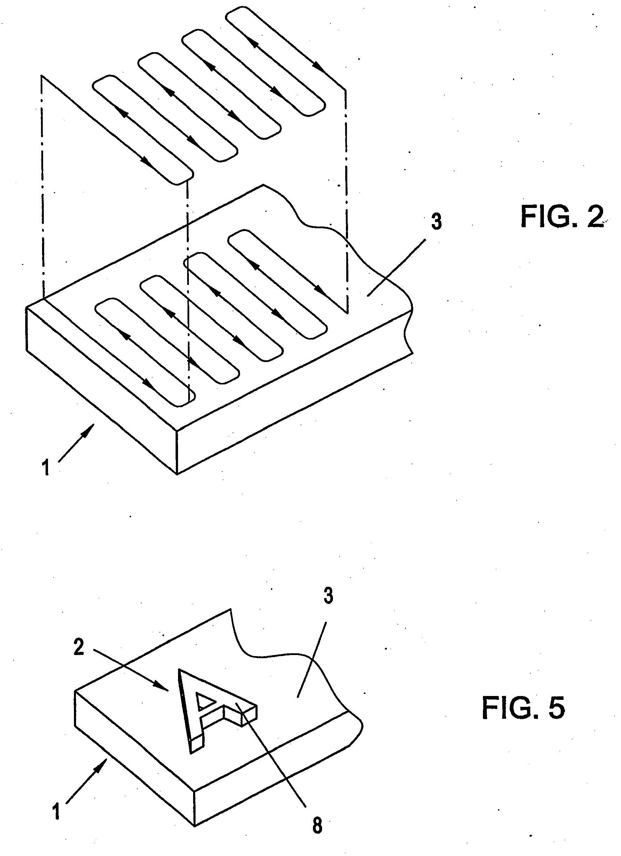

Der Druckkopf 5 überstreicht die Oberfläche 3 des Stempels 1, beispielsweise in Mäanderform, wie in Fig. 2 dargestellt ist. Überall dort wo gemäß den Daten der Rechnereinheit 15 entsprechend dem Druckmotiv 2 ein Relief auf der Oberfläche 3 des Stempels 1 erzeugt werden soll, wird tropfenweise das flüssige und aushärtbare Material 8 über die Düsen 6 des zumindest einen Druckkopfes 5 abgegeben.

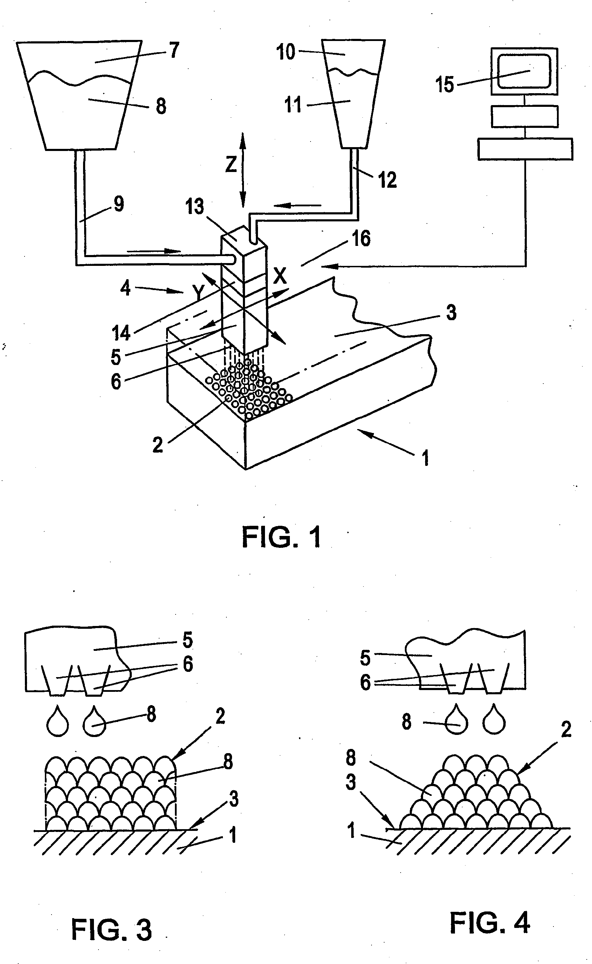

Wie in der Schnittdarstellung gemäß Fig. 3 gezeigt ist, wird durch tropfenweise Abgabe des flüssigen aushärtbaren Materials 8 jeweils eine Schicht des Materials 8 auf der Oberfläche 3 des Stempels 1 aufgebaut. Dieser Vorgang wird mehrmals wiederholt, so dass mehrere Schichten des Materials 8 übereinander angeordnet werden und somit das Druckmotiv 2 des Stempels 1 bilden. Um die Aushärtung des flüssigen Materials 8 nach dem Aufbringen auf der Oberfläche 3 des Stempels 1 zu beschleunigen, kann nach dem Auftragen beispielsweise eine Kühlung jeder Schicht des Materials 8 erfolgen. Darüber hinaus kann, wie in Fig. 3 dargestellt, der Druckkopf 5 von Schicht zu Schicht um eine geringe Distanz, welche etwa der halben Tropfenbreite entspricht, versetzt werden, um einen optimalen Schichtenaufbau zu erzielen.

Entsprechend Fig. 4 kann die Breite des aufgebrachten Materials 8 von Schicht zu Schicht verringert werden, wodurch feinere Stempelstrukturen gebildet werden können und darüber hinaus die Stabilität der entstehenden Stege des Druckmotivs 2 erhöht werden kann.

Fig. 5 zeigt eine perspektivische Ansicht eines erfindungsgemäß hergestellten Stempels 1, bei dem aus dem flüssigen und aushärtbaren Material 8 im Druckverfahren das Druckmotiv 2 auf der Oberfläche 3 gebildet wurde.

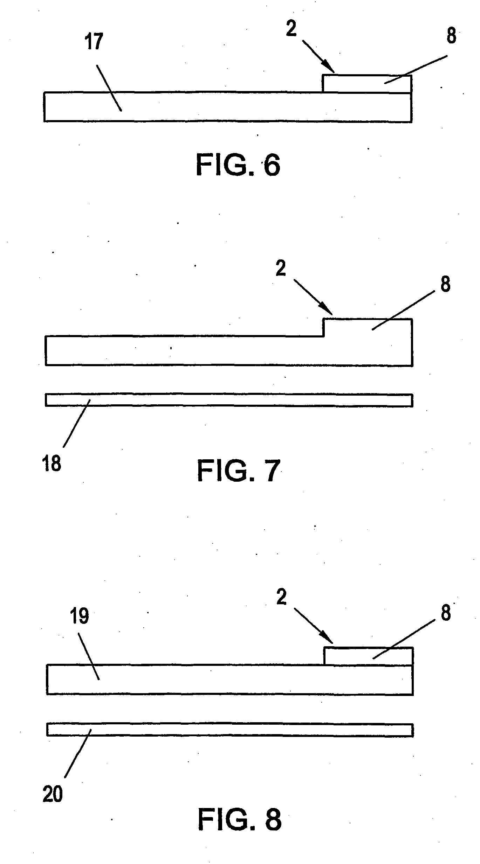

Fig. 6 zeigt ein Schnittbild durch einen Stempel 1, bei dem das Druckmotiv 2 bildende Material 8 auf eine Unterlage in Form einer Glasplatte 17 aufgedruckt wurde.

Gemäß Fig. 7 wurde das Druckmotiv 2 zusammen mit der Unterlage aus dem Material 8 auf eine Unterlage in Form einer Trägerplatte 18 aufgebracht. Die Trägerplatte 18 verbleibt in diesem Fall auf dem Stempel 1 bzw. der Druckplatte.

Bei der Variante gemäß Fig. 8 wird das Material 8 auf eine Arbeitsplatte 19, die beispielsweise aus einem weichen Polymer bestehen kann, aufgedruckt. Die Arbeitsplatte 19 wird mit einer Trägerfolie 20 verbunden, welche dazu dient, die Verzerrungen vom Druckbild zu verringern.

Um mehrere Stempel 1 mit demselben Druckmotiv 2 in einem Arbeitsschritt herzustellen, können mehrere Druckköpfe 5 miteinander verbunden sein und von einer Rechnereinheit 15 angesteuert werden. Mit dem erfindungsgemäßen Verfahren zur Herstellung von Stempeln 1 oder Druckplatten ist es möglich, in einfacher, rascher und kostengünstiger Weise Stempel 1 oder Druckplatten auch in geringen Stückzahlen herzustellen. Darüber hinaus fällt beim erfindungsgemäßen Verfahren kein Schmutz an, da im Gegensatz zu bekannten Herstellungsverfahren keine Materialabtragung stattfindet. Es ist keine weitere Bearbeitung, wie z.B. die Absaugung des abgetragenen Materials bzw. die nachträgliche Reinigung der Stempeloberfläche, notwendig. Bei Verwendung spezieller Materialien zum Aufdrucken der Stempeloberfläche können auch Stempel mit integriertem Stempelkissen, sogenannte Self-Ink-Stempel, hergestellt werden. Bei derartigen Stempeln diffundiert die Tinte durch Poren des Stempelmaterials zu dessen Oberfläche.

## Patentansprüche

1. Verfahren zur Herstellung eines Stempels oder einer Druckplatte mit einer das Druckmotiv enthaltenden Oberfläche, welche durch schichtweises Aufbringen eines flüssigen und aushärtbaren Materials auf eine Unterlage hergestellt wird, **dadurch gekennzeichnet, dass** das schichtweise Aufbringen des flüssigen und aushärtbaren Materials im Druckverfahren durchgeführt wird.

2. Verfahren nach Anspruch 1, **dadurch gekennzeichnet, dass** vor dem Aufbringen des die Oberfläche bildenden Materials eine Haftvermittlerschicht auf die Unterlage aufgetragen wird.

3. Verfahren nach Anspruch 1 oder 2, **dadurch gekennzeichnet, dass** dem die Oberfläche bildenden Material vor dem Druckvorgang Zusatzstoffe beigemischt werden.

4. Verfahren nach einem der Ansprüche 1 bis 3, **dadurch gekennzeichnet, dass** das die Oberfläche bildende Material vor und bzw. oder während dem Druckvorgang aufgewärmt wird.

5. Verfahren nach einem der Ansprüche 1 bis 4, **dadurch gekennzeichnet, dass** das Aushärten des die Oberfläche bildenden Materials zwischen dem schichtweisen Aufbringen beschleunigt wird.

6. Verfahren nach Anspruch 5, **dadurch gekennzeichnet, dass** das Aushärten durch Kühlen beschleunigt wird.

7. Verfahren nach Anspruch 5 oder 6, **dadurch gekennzeichnet, dass** das Aushärten durch Besprühen mit Härtern erfolgt.

8. Verfahren nach einem der Ansprüche 1 bis 7, **dadurch gekennzeichnet, dass** die Menge des aufgebrachten Materials dosierbar ist.

9. Verfahren nach Anspruch 8, **dadurch gekennzeichnet, dass** die Menge des aufgebrachten Materials von Schicht zu Schicht verringert wird.

10. Verfahren nach einem der Ansprüche 1 bis 9, **dadurch gekennzeichnet, dass** als die Oberfläche bildendes Material ein Polymer verwendet wird.

11. Verfahren nach einem der Ansprüche 1 bis 9, **dadurch gekennzeichnet, dass** als die Oberfläche bildendes Material flüssiger Kautschuk verwendet wird.

12. Verfahren nach einem der Ansprüche 1 bis 10, **dadurch gekennzeichnet, dass** als die Oberfläche bildendes Material ein poröses Material verwendet wird.

13. Verfahren nach einem der Ansprüche 1 bis 12, **dadurch gekennzeichnet, dass** als Unterlage eine Glasplatte verwendet wird.

14. Verfahren nach einem der Ansprüche 1 bis 13, **dadurch gekennzeichnet, dass** als Unterlage eine Trägerfolie aus Kunststoff verwendet wird.

## Claims

1. A method for producing a stamp or a printing plate with a surface containing the printing pattern which is produced by applying a liquid and hardenable material in layers on a substrate, **characterized in that** the application of the liquid and hardenable material in layers is carried out in print technology.

2. A method according to claim 1, **characterized in that** a bonding agent layer is applied on the substrate before the surface-forming material is applied.

3. A method according to claim 1 or 2, **characterized in that** additives are admixed to the surface-forming material prior to the printing procedure.

4. A method according to any one of claims 1 to 3, **characterized in that** the surface-forming material is heated before and/or during the printing procedure.

5. A method according to any one of claims 1 to 4, **characterized in that** hardening of the surface-forming material is accelerated between the layer-wise application thereof.

6. A method according to claim 5, **characterized in that** the hardening is accelerated by cooling.

7. A method according to claim 5 or 6, **characterized in that** the hardening is effected by spraying with hardening agents.

8. A method according to any one of claims 1 to 7, **characterized in that** the amount of material applied can be metered.

9. A method according to claim 8, **characterized in that** the amount of material applied is reduced from layer to layer.

10. A method according to any one of claims 1 to 9, **characterized in that** a polymer is used as the surface-forming material.

11. A method according to any one of claims 1 to 9, **characterized in that** liquid caoutchouc is used as the surface-forming material.

12. A method according to any one of claims 1 to 10, **characterized in that** a porous material is used as the surface-forming material.

13. A method according to any one of claims 1 to 12, **characterized in that** a glass plate is used as substrate.

14. A method according to any one of claims 1 to 13, **characterized in that** a carrier film of plastics is used as substrate.

## Revendications

1. Procédé pour la fabrication d'un tampon-encreur ou d'une plaque d'impression avec une surface contenant le motif d'impression, laquelle est réalisée par application couche par couche d'un matériau liquide et durcissable sur un substrat, **caractérisé en ce que** l'application couche par couche du matériau liquide et durcissable est exécutée dans un procédé d'impression.

2. Procédé selon la revendication 1, **caractérisé en ce que**, avant application du matériau formant la surface, on applique sur le substrat une couche favorisant l'adhérence.

3. Procédé selon la revendication 1 ou 2, **caractérisé en ce que** des produits additifs sont mélangés au matériau formant la surface avant le processus d'impression.

4. Procédé selon l'une des revendications 1 à 3, **caractérisé en ce que** le matériau formant la surface est échauffé avant et/ou pendant le processus d'impression.

5. Procédé selon l'une des revendications 1 à 4, **caractérisé en ce que** le durcissement du matériau formant la surface est accéléré entre l'application couche par couche.

6. Procédé selon la revendication 5, **caractérisé en ce que** le durcissement est accéléré par refroidissement.

7. Procédé selon la revendication 5 ou 6, **caractérisé en ce que** le durcissement a lieu par pulvérisation avec des agents de durcissement.

8. Procédé selon l'une des revendications 1 à 7, **caractérisé en ce que** la quantité du matériau appliqué est susceptible d'être dosée.

9. Procédé selon la revendication 8, **caractérisé en ce que** la quantité du matériau appliqué est réduite d'une couche à la suivante.

10. Procédé selon l'une des revendications 1 à 9, **caractérisé en ce que** l'on utilise un polymère à titre de matériau formant la surface.

11. Procédé selon l'une des revendications 1 à 9, **caractérisé en ce que** l'on utilise du caoutchouc liquide à titre de matériau formant la surface.

12. Procédé selon l'une des revendications 1 à 10, **caractérisé en ce que** l'on utilise un matériau poreux à titre de matériau formant la surface.

13. Procédé selon l'une des revendications 1 à 12, **caractérisé en ce que** l'on utilise une plaque de verre à titre de substrat.

14. Procédé selon l'une des revendications 1 à 13, **caractérisé en ce que** l'on utilise un film porteur en matière plastique à titre de substrat.
